Europäisches Patentamt

European Patent Office

Office européen des brevets

(19)

(11) Veröffentlichungsnummer : **0 055 212**
**B1**

(12) # EUROPÄISCHE PATENTSCHRIFT

(45) Veröffentlichungstag der Patentschrift :
25.07.84

(21) Anmeldenummer : **81810483.8**

(22) Anmeldetag : **07.12.81**

(51) Int. Cl.³ : **C 08 G   8/38,** C 08 G   8/28,
C 08 J   3/00

(54) **Verfahren zur Herstellung von Phenolharz enthaltenden Dispersionen und deren Verwendung als Klebstoffe.**

(30) Priorität : **13.12.80 GB 8040002**

(43) Veröffentlichungstag der Anmeldung :
**30.06.82 Patentblatt 82/26**

(45) Bekanntmachung des Hinweises auf die Patenterteilung : **25.07.84 Patentblatt 84/30**

(84) Benannte Vertragsstaaten :
**BE DE FR GB IT NL SE**

(56) Entgegenhaltungen :
**EP-A- 0 010 724**
**GB-A-   420 386**
**US-A- 4 131 582**

(73) Patentinhaber : **CIBA-GEIGY AG**
**Postfach**
**CH-4002 Basel (CH)**

(72) Erfinder : **Demmer, Christopher George, Dr.**
**20 Wolsey Way**
**Cherry Hinton Cambridge CB1 3JQ (GB)**
Erfinder : **Francombe, Roger**
**23 Broadmeadow**
**Sawston Cambridge CB2 4EB (GB)**
Erfinder : **Garnish, Edward William**
**11, Longhedges**
**Saffron Walden Essex CB11 3HN (GB)**
Erfinder : **Massy, Derek James Rowland**
**1 Green Lane**
**Linton Cambridge CB1 6JZ (GB)**

**0 055 212**

**Beschreibung**

Die vorliegende Erfindung betrifft ein Verfahren zur Herstellung von wässrigen Dispersionen, welche phenolische Resole und thermoplastische Polymermaterialien oder Kautschuk enthalten, und die Verwendung dieser Dispersionen zur Verbindung von Oberflächen.

Die Verwendung von flüssigen Montageklebern ist bekannt. Unter diesen Klebstoffen findet man solche, welche ein Gemisch aus einem wärmehärtbaren Harz, wie z. B. einem phenolischen Resol, und einem thermoplastischen Polymermaterial, wie z. B. Polyvinylformal oder Polyamid (Nylon) oder natürlichem oder synthetischem Kautschuk, enthalten. Das Gemisch liegt dabei gelöst oder suspendiert in einem organischen Lösungsmittel vor. Diese flüssigen Klebstoffe werden in einer Vielzahl von Konstruktionsanwendungen eingesetzt, so z. B. in der Raumfahrt- und Autoindustrie. Es besteht ein Bedarf an Montageklebern dieser Art, in welchen jedoch Wasser das organische Lösungsmittel ersetzt und das Gemisch in Form einer wässrigen Dispersion vorliegt.

Durch Verwendung solcher Dispersionen werden die Gefahren der Verunreinigung, der Toxizität und der Entflammbarkeit vermieden, welche bei Verwendung von vielen organischen Lösungsmitteln gegeben sind. Ein weiterer Vorteil liegt darin, dass verschüttete Dispersionen, bei denen Wasser die kontinuierliche Phase ist, leicht zu entfernen sind.

Die Herstellung von wässrigen Dispersionen aus einem wärmehärtbaren Harz und einem thermoplastischen Polymermaterial in industriellem Massstab erweist sich of als sehr schwierig. Es ist zum Beispiel oft notwendig, zuerst das thermoplastische Material oder den Kautschuk in einem organischen Lösungmittel aufzulösen und anschliessend mit einer bestimmten Geschwindigkeit unter kräftigem Rühren in eine Lösung eines wässrigen Schutzkolloids und/oder eines oberflächenaktiven Mittels zu geben. Das Lösungsmittel wird dann durch Erhitzen entfernt. Die erhaltene Dispersion wird anschliessend mit dem wärmehärtbaren Harz, welches ebenfalls als wässrige Dispersion vorliegt, vermischt. Ein solches Verfahren ist im allgemeinen nur dann erfolgreich, wenn die Geschwindigkeiten, mit denen die einzelnen Operationen ausgeführt werden, ausserordentlich sorgfältig eingehalten werden. Darüber hinaus sind im allgemeinen der pH-Wert, die Temperaturen sowie die Qualität der Ausgangsmaterialien ausschlaggebend für den Erfolg. Ferner werden spezielle hochwirksame und daher kostspielige Rührer sowie oft der Einsatz von vakuum zur Entfernung des Lösungsmittels benötigt.

Es wurde nun gefunden, dass stabile wässrige Dispersionen, enthaltend ein phenolisches Resol und ein thermoplastisches Polymermaterial oder einen Kautschuk, einfach und wirtschaftlich ohne Verwendung von organischen Lösungsmitteln oder teuren Apparaturen hergestellt werden können. Man löst dabei zuerst das thermoplastische Polymermaterial oder den Kautschuk in einem Phenol auf, fügt das entsprechende oberflächenaktive Mittel und/oder das Schutzkolloid, das Wasser und eine Formaldehydquelle hinzu und bringt das Phenol mit dem Formaldehyd unter bestimmten Reaktionsbedingungen (pH, Temperatur, Erhitzen) zur Reaktion, wobei ein phenolisches Resol entsteht.

Die Reaktion zwischen einem Phenol und Formaldehyd in Gegenwart eines thermoplastischen Polymermaterials oder eines Kautschuks ist an sich nicht neu. Die britischen Patentschriften 958 119, 1 178 679 und 1 211 226 beschreiben Klebstoffemulsionen, welche dadurch erhalten werden, dass man einen natürlichen oder synthetischen Kautschuklatex mit einer wässrigen Phenol- und Formaldehydlösung vermischt und zur Reaktion bringt.

In der britischen Patentschrift 1 263 915 ist ferner eine Methode zur Herstellung von Kautschukzement-Zusammensetzungen beschrieben, welche in der Herstellung von verstärkten Kautschukartikel verwendet werden. Gemäss dieser Beschreibung wird eine organische Kautschuklösung oder -dispersion mit einem Harzvorläufer vermischt. Der Harzvorläufer, welcher im gleichen Lösungsmittel wie der Kautschuk oder in einem anderen vorliegt, kann aus einem Formaldehyd abgebenden Mittel und einer aromatischen Hydroxylverbindung, wie z. B. Resorcin oder 1,3-Dihydroxynaphthalin, bestehen. Die Zusammensetzung wird zur Verstärkung verwendet und getrocknet.

In der britischen Patentschrift 1 213 351 ist die Herstellung von Reibungseinlagen aus einem Gemisch, bestehend aus einer Reibungsmasse und einem Phenolharz beschrieben. Das Phenolharz wurde seinerseits aus einem Gemisch, welches 1-15 Gew.-% Polyamid (Nylon) enthielt, bezogen auf das Phenolgewicht, hergestellt. In einem Beispiel ist die Umsetzung von Kresol und Formaldehyd mit Schwefelsäure als Katalysator und in gegenwart von Nylon beschrieben.

In einem Auszug der JP Offenlegungsschrift 77/06742 (Chemical Abstracts, Vol. 87, 136980y) sind Klebstoffe beschrieben, die aus einem Gemisch von Phenol, Formalin, wässrigem Natriumhydroxid und Polyvinylalkohol entstanden. Die erhaltene Polymerlösung wurde vor der Anwendung mit einem Resorcinformaldehydharz vermischt.

In keinen dieser Publikationen ist die Herstellung von stabilen Dispersionen, welche durch Umsetzung eines Phenols, in dem ein thermoplastisches Polymermaterial oder Kautschuk gelöst ist, mit Formaldehyd in Gegenwart von Wasser und einem oberflächenaktiven Mittel und/oder Schutzkolloid, offenbart.

Gegenstand der Erfindung ist daher ein Verfahren zur Herstellung wässriger Dispersionen, welches dadurch gekennzeichnet ist, dass man

a) ein festes, thermoplastisches Polymermaterial oder Kautschuk in Mengen von 5-100 Gew.%, bezogen auf das Phenolgewicht, in einem flüssigen Phenol auflöst,

b) mindestens ein nicht-ionogenes oder anionisches oberflächenaktives Mittel und/oder mindestens ein Schutzkolloid zufügt,

c) den pH-Wert des erhaltenen Gemisches mit Hilfe einer Base auf > 7 einstellt,

d) eine wässrige Formaldehydlösung oder ein Formaldehyd abgebendes Mittel in einem Molverhältnis von 1 : 1 bis 1 : 3 von Phenol zu Formaldehyd zugibt,

e) falls nötig, dem Gemisch so viel Wasser zufügt, bis es mindestens 20 Gew.% Wassergehalt, bezogen auf das Gewicht des Phenols, aufweist, und

f) das Gemisch durch Erhitzen zur Reaktion bringt, um das phenolische Resol zu bilden.

Die Schritte a) und e) können in beliebiger Reihenfolge ausgeführt werden ; bevorzugt wird im ersten Schritt das feste thermoplastische Polymermaterial oder der Kautschuk in dem Phenol oder in einer konzentrierten wässrigen Lösung des Phenols gelöst.

Als beim erfindungsgemässen Verfahren verwendbare Phenole kommen die in der Resolherstellung üblichen Phenole in Frage, die bis etwa 100 °C bei den angegebenen Reaktionsbedingungen flüssig sind. Sie können beispielsweise Wasser enthalten oder in Form eines Phenolgemisches oder eines Gemisches aus Phenolen mit deren methylolierten Derivaten eingesetzt werden. Typische Phenole sind das Phenol selbst, Resorcin, p-Kresol, m-Kresol, 2,6-Xylenol, p-Nonylphenol, p-tert.-Butylphenol, Isopropylphenol, Bis(p-hydroxyphenyl) methan oder 2,2-Bis(p-hydroxyphenyl) propan.

Formaldehyd abgebende Mittel sind solche Stoffe, die fähig sind, unter den Reaktionsbedingungen Formaldehyd freizusetzen, so zum Beispiel Paraformaldehyd und Trioxan.

Für das erfindungsgemässe Verfahren geeignete anionische oberflächenaktive Mittel sind beispielsweise die Alkalimetallsalze der $C_{12}$-$C_{18}$ aliphatischen Carbonsäuren, der Alkylbenzolsulfonsäuren, der Naphthalinsulfonsäuren, der Sulfatester der langkettigen Fettsäuren oder der Polyoxyäthylen-Alkylschwefelsäuren.

Geeignete nicht-ionogene oberflächenaktive Mittel sind polyoxyalkylierte Alkylphenole, polyoxyalkylierte Alkylphenol-Novolaks, polyoxyalkylierte Fettsäuren, polyoxyalkylierten Harzsäuren, langkettige polyoxyalkylierte Alkoholen und polyoxyalkyliertes Rizinusöl.

Für das erfindungsgemässe Verfahren geeignete Schutzkolloide sind synthetische Materialien, wie zum Beispiel Polyvinylalkohol oder teilweise hydrolysiertes Polyvinylacetat, halbsynthetische Materialien, wie zum Beispiel wasserlösliche Celluloseäther, insbesondere Natriummethylcellulosecarboxylat oder Methylcellulose, und natürliche Materialien, wie zum Beispiel Arabingummi, Tragantgummi, Algin, Karraghenmoos oder Amylopektin.

Die Kondensation von Phenol und Formaldehyd zu phenolischem Resol wird, wie bereits erwähnt, in alkalischem Milieu durchgeführt. Als Basen kommen die Alkali- und Erdalkalimetallhydroxide, insbesondere Natrium- und Kaliumhydroxid, Ammoniumhydroxid und tertiäre Amine, insbesondere Triäthylamin, in Frage.

Die Menge des vorhandenen Wassers ist nicht entscheidend, vorausgesetzt, dass mindestens 20 Gew.% Wasser, bezogen auf das Phenolgewicht, vorhanden sind. Es muss selbstverständlich genügend vorhanden sein, damit das Gemisch als Dispersion vorliegen kann. Vorzugsweise beträgt das im Gemisch vorhandene Wasser maximal 400 Gew.%, besonders bevorzugt 100-200 Gew.%, bezogen auf das Phenolgewicht.

Eine grosse Anzahl von thermoplastischen Polymermaterialien oder Kautschuk kann verwendet werden, vorausgesetzt, dass diese im Phenol bei Raumtemperatur im wesentlichen löslich sind. Geeignete thermoplastische Polymermaterialien sind z. B. Polyvinylacetat, Aethylen-Vinylacetat-Copolymer, Acrylnitril-Butadien-Styrol-Copolymer, Polystyrol, Polysulfon, Polycarbonat, Polyamid (Nylon) oder Acetale von Polyvinylalkohol, vorzugsweise Polyvinylbutyral, Polyvinylacetal, und insbesondere Polyvinylformal.

Diese Polymeren haben normalerweise ein durchschnittliches Molgewicht von über 10 000. Bevorzugt sind Polymere mit 20 000 bis 250 000.

Das thermoplastische Polymermaterial oder der Kautschuk ist in Mengen von 5 bis 100 Gew.%. vorzugsweise von 10 bis 60 Gew.%, bezogen auf das Phenolgewicht, im Reaktionsgemisch vorhanden. Gewöhnlich fügt man das thermoplastische Polymermaterial oder den Kautschuk in fein verteilter Form dem Phenol zu.

Das Verfahren kann bei Temperaturen von 30 °C bis zum Siedepunkt des Gemisches, gegebenenfalls unter Druck, durchgeführt werden. Vorzugsweise wird die Reaktion bei Temperaturen von 40 °C bis 120 °C, insbesondere von 60 °C bis 100 °C, durchgeführt. Normalerweise ist sie innerhalb 6 Stunden beendet.

Die nach dem erfindungsgemässen Verfahren hergestellten Dispersionen sind im allgemeinen bei Raumtemperatur lagerstabil. Probestücke, welche 6 Monate lang bei 20 °C gelagert wurden, waren frei von Trennungserscheinungen oder von anderen Zeichen der Unbeständigkeit. Die Dispersionen können auf eine der beiden zu verbindnenden Oberflächen oder auf beide Oberflächen z. B. durch Streichen, Sprühen, Tauchen, Walzenbeschichten aufgetragen werden. Man lässt sie entweder bei Raumtemperatur oder durch vorsichtiges Erwärmen bis auf 90 °C trocknen. Die Oberflächen werden dann zusammengefügt, und das Resol wird bei Temperaturen von 100 °C bis 200 °C, vorzugsweise von 140 °C bis 180 °C, ausgehärtet. Die Aushärtung ist im allgemeinen nach 2 Stunden beendet. Aushärtungszeiten von 20 Minuten bis 1 Stunde werden bevorzugt.

0 055 212

Ein weiterer Gegenstand der Erfindung ist daher die Verwendung der nach dem erfindungsgemässen Verfahren hergestellten wässrigen Dispersionen zur Verbindung von Oberflächen, wobei mindestens eine der Oberflächen mit besagter Dispersion überzogen wird, worauf man die Dispersion trocknen lässt oder trocknet, die Oberflächen miteinander in Kontakt bringt und durch Erhitzen das in der Dispersion enthaltene phenolische Resol aushärtet.

Das nach dem erfindungsgemässen Verfahren hergestellte Gemisch kann zur Verbindung aller Substrate verwendet werden, welche von den erforderlichen Härtungstemperaturen nicht beeinträchtigt werden. Normalerweise ist eines der Substrate ein Metall, während das andere das gleiche oder ein anderes Metall, ein gehörteter Verbundstoff, ein thermoplastisches Polymermaterial mit hohem Schmelzpunkt, ein gehärtetes Harz oder ein ähnliches Material sein kann. Die Dispersionen sind zur Herstellung von Reibungseinlagen geeignet, so z. B. als Bremspolster bei den Metallbacken.

In den nachfolgenden Beispielen bedeuten alle Teile Gewichtsteile und alle Prozente Gewichtsprozente. Der Feststoffgehalt wird auf die Weise bestimmt, dass man ein 2-g-Probestück in einer 5 cm grossen offenen Schale währen 3 Stunden bei 120 °C erhitzt und anschliessend den Gewichtsverlust misst.


Beispiel 1


214 g Phenol industriellen Reinheitsgrades (77 % Phenol, 23 % Wasser) und 0,5 g Aethylcellulose werden zusammen bei Raumtemperatur gerührt, bis die Aethylcellulose sich vollständig aufgelöst hat. Das Gemisch wird dann auf 50 °C erwärmt. Man löst 66 g Polyvinylformal (durchschnittliches Molekulargewicht 24 000-40 000) portionenweise im Lauf von 2 Stunden im Gemisch auf, bis eine vollständige Lösung entsteht. Zu dieser Lösung werden 0,5 g Na-Salz von Dioctylsuccinatsulfonsäure als oberflächenaktives Mittel und die folgenden Schutzkolloide zugefügt : 11 g Arabingummi, 2,8 g teilweise hydrolisiertes Polyvinylacetat (Hydrolysegrad : 87-89 %), 0,8 g Tragantgummi und 3,5 g Natriummethylcellulosecarboxylat. Anschliessend werden 34,5 g Wasser, 15,6 g wässriges Ammoniak (31,1 % $NH_3$) und 229 g Formalin (36,7 % $H_2CO$) zur Lösung gegeben. Das Gemisch wird gerührt und während einer Stunde unter Rückfluss gekocht, dann auf Raumtemperatur abgekühlt, wobei während des Abkühlens weiter gerührt wird. Die erhaltene Dispersion mit einem Feststoffgehalt von 47,7 % bleibt bei Raumtemperatur über 6 Monate lagerstabil.

Aehnliche Ergebnisse werden erzielt, wenn man Polyvinylformal durch die gleiche Menge Hycar CTBN 1 300X 13 ® (ein Acrylnitril-Butadien Kautschuk der Goodrich Chem. Co., Akron, Ohio, U.S.A.) oder PK/HH (ein Phenoxyharz der Union Carbide UK Ltd., Richmansworth, Hertfordshire, GB) oder Gelva 25 ® (ein Polyvinylacetat der Monsanto Ltd., London, GB) oder Blendex 101 ® (ein Acrylnitril-Butadien-Styrol-Copolymer der Borg Warner Ltd., Letchworth, Hertfordshire, GB) oder P 3 500 (ein Polysulfon der Union Carbide UK Ltd.) oder Ultramid I.C. ® (ein Polyamid der B.A.S.F. UK Ltd., Cheadle Hulme, Cheshire, GB) oder Butvar B 75 ® (ein Polyvinylbutyral der Monsanto Ltd.) oder Vinapol 92L ® (ein Polyvinylalkohol der Vinyl Products Ltd., Carshalton, Surrey, GB) ersetzt.


Beispiel 2


Die Arbeitsweise von Beispiel 1 wird mit dem Unterschied wiederholt, dass man das oberflächenaktive Mittel und das Tragantgummi weglässt und an deren Stelle 12 g Arabingummi und 3 g teilweise hydrolysiertes Polyvinylacetat verwendet.


Beispiel 3


Die Arbeitsweise von Beispiel 1 wird wiederholt, wobei man jedoch 311,7 g Phenol des gleichen Reinheitsgrades, 0,7 g Aethylcellulose, 74,5 g Polyvinylformal, und anstelle des oberflächenaktiven Mittels und des Tragantgummis 16,8 g Arabingummi, 3,9 g teilweise hydrolysiertes Polyvinylacetat und 4,9 g Natriummethylcellulosecarboxylat verwendet.


Beispiel 4


42 g Phenol (100 %ig), 0,5 g Aethylcellulose und 12 g Hycar CTBN 1 300X 13 ® werden zusammengegeben und auf 80 °C so lange gerührt, bis sich die Aethylcellulose vollständig aufgelöst hat. Das Gemisch wird auf dieser Temperatur gehalten und mit den folgenden Substanzen vermischt : 2,5 g teilweise hydrolysiertes Polyvinylacetat (Hydrolysegrad : 87-89 %), 1,5 g natriummethylcellulosecarboxylat, 0,4 g Na-Salz von Dioctylsuccinatsulfonsäure, dann 8,6 g Wasser, 4,0 g wässriges Ammoniak (31 % $NH_3$) und 49,3 g Formalin (38,1 % $H_2CO$). Das Gemisch wird gerührt und während einer Stunde unter Rückfluss gekocht, dann auf Raumtemperatur abgekühlt, wobei während des Abkühlens weiter gerührt wird. Die erhaltene Dispersion, welche einen Feststoffgehalt von 53,8 % und eine durchschnittlich Teilchengrösse von 4 μm aufweist, ist bei Raumtemperatur lagerstabil.

4

# 0 055 212

## Beispiel 5

42 g Phenol (100 %ig) werden geschmolzen und auf 80 °C gehalten, während ihm 12 g Polyamid (Ultramid I.C. ®) portionsweise zugefügt werden. 2,5 g teilweise hydrolysiertes Polyvinylacetat (Hydrolysegrad : 87-89 %) werden zum Gemisch gegeben, das man dann auf Raumtemperatur abkühlt und unter Zugabe von 0,5 g Aethylcellulose so lange rührt, bis die Aethylcellulose in Lösung geht. Anschliessend wird die Lösung auf 50 °C erwärmt und mit 1,5 g Natriummethylcellulosecarboxylat, 0,4 g Na-Salz von Dioctylsuccinatsulfonsäure, 8,6 g Wasser, 4,0 g wässrigem Ammoniak und 49,3 g Formalin (38,1 % $H_2CO$) vermischt, erwärmt und abgekühlt, wie im Beispiel 4 beschrieben ist. Die erhaltene Dispersion ist bei Raumtemperatur lagerstabil und weist eine durchschnittliche Teilchengrösse von 5 µm auf.

## Beispiel 6

42 g Phenol (100 %ig) werden geschmolzen und auf 80 °C gehalten, während man 0,5 g Aethylcellulose und 4,5 g Polyvinylbutyralharz (Butvar B90 ®) portionsweise zufügt. Innerhalb von 30 Minuten entsteht eine vollständige Lösung, zu der man 2,5 g teilweise hydrolysiertes Polyvinylacetat (Hydrolysegrad : 87-89 %), 1,5 g Natriummethylcellulosecarboxylat, 0,4 g Na-Salz von Dioctylsuccinatsulfonsäure, 8,6 g Wasser, 4,0 g wässriges Ammoniak (31 % $NH_3$) und 49,3 g Formalin (38,1 % $H_2CO$) gibt. Das Gemisch wird erhitzt und dann abgekühlt, wie in Beispiel 4 beschrieben ist. Die Dispersion weist einen Feststoffgehalt von 44,7 % und eine durchschnittliche Teilchengrösse von 5 µm auf.

## Beispiel 7

42 g Phenol (100 %ig) werden geschmolzen und auf 80 °C gehalten, während man 0,5 g Aethylcellulose und 10,3 g Polycarbonatharz mit einem durchschnittlichen Molekulargewicht von 25 000 (hergestellt aus Bisphenol A und Phosgen) portionsweise zufügt. Innerhalb von 4 Stunden entsteht eine vollständige Lösung, zu der man 2,5 g teilweise hydrolysiertes Polyvinylacetat (Hydrolysegrad : 87-89 %), 1,5 g Natriummethylcellulosecarboxylat, 0,4 g Na-Salz von Dioctylsuccinatsulfonsäure, 8,6 g Wasser, 4,0 g wässriges Ammoniak (31 % $NH_3$) und 49,3 g Formalin (38,1 % $H_2CO$) gibt. Das Gemisch wird erhitzt und dann abgekühlt, wie in Beispiel 4 beschrieben ist. Die erhaltene dispersion weist einen Feststoffgehalt von 55,5 % und eine durchschnittliche Teilchengrösse von 5 µm auf.

## Beispiel 8

42 g Phenol (100 %ig) werden geschmolzen und auf 80 °C gehalten, während man 0,5 g Aethylcellulose und 6 g Phenoxyharz portionsweise zufügt. Innerhalb von 1 1/2 Stunden entsteht eine vollständige Lösung, zu der man 2,5 g teilweise hydrolysiertes Polyvinylacetat (Hydrolysegrad : 87-89 %), 1,5 g Natriummethylcellulosecarboxylat, 0,4 g Na-Salz von Dioctylsuccinatsulfonsäure, 8,6 g Wasser, 4,0 g wässriges Ammoniak (31 % $NH_3$) und 49,3 g Formalin (38,1 % $H_2CO$) gibt. Das Gemisch wird erhitzt und dann abgekühlt, wie in Beispiel 4 beschrieben ist. Die Dispersion weist eine durchschnittliche Teilchengrösse von 5 µm auf.

## Beispiel 9

119,8 g m-Kresol (100 %ig) und 1,1 g Aethylcellulose werden Zusammen gerührt und erwärmt, bis die Aethylcellulose sich vollständig aufgelöst hat. Die Temperatur des Gemisches ist am Schluss 95 °C. Zu diesem Gemisch gibt man 33 g Polyvinylformal (durchschnittliches Molekulargewicht 16 000-20 000) portionsweise im Lauf von 2 Stunden, bis eine vollständige Lösung entstanden ist. Anschliessend fügt man 5,5 g teilweise hydrolysiertes Polyvinylacetat (Hydrolysegrad : 87-89 %), 3,3 g Natriummethylcellulosecarboxylat, 1,6 g Na-Salz von Dioctylsuccinatsulfonsäure, 33,3 g Wasser, 7,9 g wässriges Ammoniak (35 % $NH_3$) und 127,6 g Formalin (36,5 % $H_2CO$), wie in Beispiel 4, hinzu. Das Gemisch wird unter Rühren während einer Stunde zum Ruckfluss erhitzt und anschliessend mit 150 g Wasser vermischt. Die Lösung wird auf Raumtemperatur abgekühlt, wobei während des Abkühlens weiter gerührt wird. Die Dispersion weist einen Feststoffgehalt von 37% und eine durchschnittliche Teilchengrösse von 4 µm auf.

## Beispiel 10

206 g Phenol industriellen Reinheitsgrades (80 % Phenol, 20 % Wasser) und 1 g Aethylcellulose werden zusammen bei Raumtemperatur gerührt, bis sich die Aethylcellulose vollständig aufgelöst hat. Das Gemisch wird dann auf 50 °C erwärmt, worauf man darin 66 g Polyvinylformal (durchschnittliches Molekulargewicht 24 000-40 000) portionsweise im Lauf von über 1 Stunde auflöst, bis eine vollständige Lösung entstanden ist. Zu dieser Lösung werden 10 g teilweise hydrolysiertes Polyvinylacetat (Hydrolysegrad : 87-89 %), 6 g Natriummethylcellulosecarboxylat, 0,8 g Na-Salz von Dioctylsuccinatsulfonsäure, 34,4 g Wasser, 16,2 g wässriges Ammoniak (29,7 % $NH_3$) und 197,2 g Formalin (38,1 % $H_2CO$) zugefügt. Das

Gemisch wird erhitzt und abgekühlt, wie in Beispiel 4 beschrieben ist. Die Dispersion weist einen Feststoffgehalt von 45,3 % und eine durchschnittliche Teilchengrösse von 2 μm auf.

## Beispiel 11

Die im Beispiel 1 hergestellte Dispersion wird auf entfettete, sandgestrahlte, glänzende, gewalzte Weichstahlstreifen von 25 mm Breite und 1,63 mm Dicke aufgebracht. Die Streifen lässt man bei 85 °C während 30 Minuten trocknen und überdeckt sie anschliessend mit ähnlichen, nicht behandelten Stahlstreifen so, dass sie auf einer Breite von 12 mm überlappen und zusammenkleben. Die Verklebungen werden unter 700 kPa ausgehärtet und ihre Zugscherfestigkeiten bei 23 °C und bei 200 °C gemessen. Die Ergebnisse sind in Tabelle 1 zusammengefasst. Die Zahlen bedeuten jeweils den Durchschnittswert von vier Ergebnissen.

### Tabelle 1

| Härtungstemp./Zeit | Zugscherfestigkeit (kN) bei | |
|---|---|---|
| | 23°C | 200°C |
| 150°C / 30 Min. | 3,48 | 0,83 |
| 150°C / 60 Min. | 2,36 | 1,25 |
| 180°C / 30 Min. | 3,35 | 1,49 |
| 180°C / 60 Min. | 3,18 | 1,24 |

## Beispiel 12

25 × 25 mm grosse und 5 mm dicke Probestücke von im Handel erhältlichen Autobremsfutter werden zwischen Stahlstreifen, die im Beispiel 11 beschrieben und mit der Dispersion aus Beispiel 1 überzogen sowie bei 85 °C während 30 Minuten getrocknet worden sind, eingeklemmt.

Die Zusammensetzung wird unter 700 kPa gehärtet, und die Zugscherfestigkeit wird gemessen. Die Ergebnisse sind in Tabelle 2 zusammengefasst. Die Zahlen bedeuten jeweils den Durchschnittswert von drei Ergebnissen.

### Tabelle 2

| Härtungstemp./Zeit | Zugscherfestigkeit (kN) bei | |
|---|---|---|
| | 23°C | 200°C |
| 150°C / 30 Min. | 3,94 (15) * | 2,23 (100) |
| 180°C / 30 Min. | 3,77 (25) | 2,26 (100) |
| 180°C / 45 Min. | 3,58 (35) | 2,16 (100) |
| 180°C / 60 Min. | 3,36 (25) | 2,15 (100) |

*Die Zahlen in den Klammern geben prozentual die Anzahl Brüche an, welche im Bremsfutter selbst und nicht auf der Grenzfläche von Bremsfutter und Metall vorkamen.

## Beispiel 13

Beispiel 11 wird wiederholt, jedoch mit dem Unterschied, dass man die Dispersionen aus den Beispielen 4, 5 und 8 bis 10 verwendet. Die Verklebungen werden jeweils bei 180 °C unter 700 kPa während 30 Minuten ausgehärtet. Die Zugscherfestigkeit wird bei 23 °C und bei 200 °C gemessen. Die Ergebnisse sind in Tabelle 3 zusammengefasst. Die Zahlen bedeuten jeweils den Durchschnittswert von vier Ergebnissen.

(Siehe Tabelle 3, Seite 7 f.)

6

Tabelle 3

| Produkt aus Beispiel | Zugscherfestigkeit (kN) bei | |
|---|---|---|
| | 23°C | 200°C |
| 4 | 1,12 | 0,5 |
| 5 | 4,02 | 2,52 |
| 8 | 2,63 | 0,44 |
| 9 | 1,24 | 1,19 |
| 10 | 3,40 | 0,58 |

Beispiel 14

Beispiel 12 wird wiederholt, wobei man jedoch die Dispersion aus Beispiel 5 verwendet. Die entstandene Zusammensetzung wird bei 180°C unter 700 kPa während 30 Minuten gehärtet. Die Zugscherfestigkeit wird bei Raumtemperatur und bei 200 °C gemessen.

Beide Zahlen bedeuten den Durchschnittswert von drei Ergebnissen :

Zugscherfestigkeit bei    23 °C : 3,34 kN    (70)
Zugscherfestigkeit bei  200 °C : 2,08 kN  (100)

Die Zahlen in den Klammern geben prozentual die Anzahl Brüche an, welche im Bremsfutter selbst und nicht auf der Grenzfläche von Bremsfutter und Metall vorkamen.

**Ansprüche**

1. Verfahren zur Herstellung wässriger Dispersionen, dadurch gekennzeichnet, dass man
a) ein festes, thermoplastisches Polymermaterial oder Kautschuk in Mengen von 5-100 Gew.%, bezogen auf das Phenolgewicht, in einem flüssigen Phenol auflöst,
b) mindestens ein nicht-ionogenes oder anionisches oberflächenaktives Mittel und/oder mindestens ein Schutzkolloid zufügt,
c) den pH-Wert des erhaltenen Gemisches mit Hilfe einer Base auf > 7 einstellt,
d) eine wässrige Formaldehydlösung oder ein Formaldehyd abgebendes Mittel in einem Molverhältnis von 1 : 1 bis 1 : 3 von Phenol zu Formaldehyd zugibt,
e) falls nötig, dem Gemisch so viel Wasser zufügt, bis es mindestens 20 Gew.-% Wassergehalt, bezogen auf das Gewicht des Phenols, aufweist, und
f) das Gemisch durch Erhitzen zur Reaktion bringt, um das phenolische Resol zu bilden.

2. Verfahren gemäss Anspruch 1, dadurch gekennzeichnet, dass man als Phenol Phenol selbst, Resorcin, p-Kresol, m-Kresol, 2,6-Xylenol, p-Nonylphenol, p-tert.-Butylphenol, Isopropylphenol, Bis-(p-hydroxyphenyl) methan oder 2,2-Bis (p-hydroxyphenyl) propan einzeln oder als ein Gemisch von mindestens zwei dieser Phenole oder als ein Gemisch von einem dieser Phenole mit einem methylolierten Derivat davon verwendet.

3. Verfahren gemäss Ansprüche 1 oder 2, dadurch gekennzeichnet, dass man als thermoplastisches Polymermaterial Polyvinylacetat, Aethylen-Vinylacetat-Copolymer, Acrylnitril-Butadien-Styrol-Copolymer, Polystyrol, Polysulfon, Polycarbonat, Polyamid (Nylon) oder Polyvinylacetal verwendet.

4. Verfahren gemäss einem der Ansprüche 1-3, dadurch gekennzeichnet, dass das thermoplastische Polymermaterial ein durchschnittliches Molekulargewicht von über 10 000, vorzugsweise von 20 000 bis 250 000, aufweist.

5. Verfahren gemäss einem der Ansprüche 1-4, dadurch gekennzeichnet, dass das thermoplastische Polymermaterial in Mengen von 10 bis 60 Gew.%, bezogen auf das Gewicht des Phenols, vorhanden ist.

6. Verfahren gemäss einem der Ansprüche 1-5, dadurch gekennzeichnet, dass das oberflächenaktive Mittel anionisch ist und ein Alkalimetallsalz einer $C_{12}$-$C_{18}$ aliphatischer Carbonsäure, einer Alkylbenzolsulfonsäure, einer Naphthalsinsulfonsäure, eines Sulfatesters einer langkettigen Fettsäure oder eine Polyoxyäthylen-Alkylschwefelsäure ist.

7. Verfahren gemäss einem der Ansprüche 1-6, dadurch gekennzeichnet, dass das oberflächenaktive Mittel nicht-ionogen ist und ein polyoxyalkyliertes Alkylphenol, ein polyoxyalkylierter Alkylphenol-Novolak, eine polyoxyalkylierte Fettsäure, eine polyoxyalkylierte Harzsäure, ein langkettiger polyoxyalkylierter Alkohol oder polyoxyalkyliertes Rizinusöl ist.

8. Verfahren gemäss einem der Ansprüche 1-7, dadurch gekennzeichnet, dass das Schutzkolloid Polyvinylalkohol, teilweise hydrolysiertes Polyvinylacetat, Natriummethylcellulosecarboxylat, Methylcellulose, Arabingummi, Tragantgummi, Algin, Karragheenmoos oder Amylopektin ist.

9. Verfahren gemäss einem der Ansprüche 1-8, dadurch gekennzeichnet, dass man das Gemisch auf eine Temperatur von 40 °C bis 120 °C erhitzt, um das phenolische Resol zu bilden.

10. Verwendung der nach dem Verfahren gemäss einem der Ansprüche 1-9 hergestellten wässrigen Dispersionen zur Verbindung von Oberflächen, wobei mindestens eine der Oberflächen mit besagter Dispersion überzogen ist, dadurch gekennzeichnet, dass man die Dispersion trocknen lässt oder trocknet, die Oberflächen miteinander in Kontakt bringt und durch Erhitzen das in der Dispersion enthaltene phenolische Resol aushärtet.


**Claims**

1. A process for the preparation of aqueous dispersions, which comprises
   a) dissolving a solid thermoplastics polymeric material or a solid rubber in amounts of 5-100 % by weight, based on the weight of the phenol, in a phenol which is in a liquid state,
   b) adding at least one nonionic or ionic surface active agent and/or at least one protective colloid,
   c) adjusting the resulting mixture to a pH above 7 by addition of a base,
   d) adding aqueous formaldehyde solution, or a formaldehyde donor, in a molar ratio of phenol to formaldehyde within the range 1 : 1 to 1 : 3,
   e) adding water if necessary, to bring the mixture to a water content of at least 20 % by weight, calculated on the weight of the phenol, and
   f) heating the mixture and allowing it to react to form a phenolic resole.

2. A process according to claim 1, wherein the phenol is phenol itself, resorcinol, p-cresol, m-cresol, 2,6-xylenol, p-nonylphenol, p-tert-butylphenol, an isopropylphenol, bis(p-hydroxyphenyl) methane, or 2,2-bis(p-hydroxyphenyl) propane, a mixture of at least two of these phenols, or a mixture of any of these phenols and a methylolated derivative thereof.

3. A process according to either claim 1 or claim 2, wherein the thermoplastics polymeric material is polyvinyl acetate, an ethylenevinyl acetate copolymer, an acrylonitrile-butadiene-styrene copolymer, polystyrene, a polysulfone, a polycarbonate, a polyamide (nylon), or a polyvinyl acetal.

4. A process according to any one of claims 1 to 3, wherein the thermoplastics polymeric material has an average molecular weight above 10 000, preferably from 20 000 to 250 000.

5. A process according to any one of claims 1 to 4, wherein the amount of the thermoplastics polymeric material is from 10 % to 60 % by weight, based on the weight of the phenol.

6. A process according to any one of claims 1 to 5, wherein the surface active agent is anionic and is an alkali metal salt of an aliphatic carboxylic acid of 12 to 18 carbon atoms, an alkylbenzenesulfonic acid, a naphthalenesulfonic acid, a sulfated ester of a long chain fatty acid, or a polyoxyethylene alkylsulfuric acid.

7. A process according to any one of claims 1 to 6, wherein the surface active agent is nonionic and is a polyoxyalkylated alkylphenol, a polyoxyalkylated alkylphenol novolak, a polyoxyalkylated fatty acid, a polyoxyalkylated resinic acid, a polyoxyalkylated long chain alcohol, or olyoxyalkylated castor oil.

8. A process according to any one of claims 1 to 7, wherein the protective colloid is a polyvinyl alcohol, a partially hydrolysed polyvinyl acetate, sodium carboxymethylcellulose, methylcellulose, gum arabic, gum tragacanth, algin, carrageenin, or amylopectin.

9. A process according to any one of claims 1 to 8, wherein the mixture is heated to a temperature within the range 40° to 120 °C to form the phenolic resole.

10. A method of bonding surfaces together which comprises coating at least one surface with an aqueous dispersion prepared by a process as claimed in any one of claims 1 to 9, allowing or causing the dispersion to dry, bringing the surfaces into contact, and heating the assembly to cure the phenolic resole contained in the dispersion.


**Revendications**

1. Procédé de préparation de dispersions aqueuses, caractérisé en ce que
   a) on dissout une matière polymère thermoplastique solide ou un caoutchouc dans des quantités de 5 à 100 % en poids, par rapport au poids du phénol, dans un phénol liquide,
   b) on ajoute au moins un agent surfactif non ionique ou anionique et/ou au moins un colloïde protecteur,
   c) on ajoute le pH du mélange obtenu à > 7 à l'aide d'une base,
   d) on ajoute une solution aqueuse de formaldéhyde ou un agent cédant du formaldéhyde dans un rapport molaire du phénol au formaldéhyde de 1 : 1 à 1 : 3,
   e) si nécessaire, on ajoute au mélange une quantité d'eau telle qu'il présente une teneur en eau d'au moins 20 % en poids par rapport au poids du phénol, et
   f) on fait réagir le mélange par chauffage pour former le résol phénolique.

2. Procédé suivant la revendication 1, caractérisé en ce qu'on utilise comme phénol lui-même, le résorcinol, le p-crésol, le m-crésol, le xylénol-2,6, le p-nonylphénol, le p-tert-butylphénol, l'isopropylphénol, le bis-(p-hydroxyphényl) méthane ou le bis(p-hydroxyphényl)-2,2 propane individuellement ou sous la forme d'un mélange d'au moins deux de ces phénols ou sous la forme d'un mélange d'un de ces phénols avec un de ses dérivés méthylolés.

3. Procédé suivant l'une quelconque des revendications 1 ou 2, caractérisé en ce qu'on utilise comme matière polymère thermoplastique de l'acétate de polyvinyle, un copolymère éthylène-acétate de vinyle, un copolymère acrylonitrile-butadiène-styrène, du polystyrène, une polysulfone, un polycarbonate, un polyamide (nylon) ou de l'acétal polyvinylique.

4. Procédé suivant l'une quelconque des revendications 1 à 3, caractérisé en ce que la matière polymère thermoplastique présente une masse moléculaire moyenne de plus de 10 000, de préférence de 20 000 à 250 000.

5. Procédé suivant l'une quelconque des revendications 1 à 4, caractérisé en ce que la matière polymère thermoplastique est présente dans des quantités de 10 à 60 % en poids, par rapport au poids du phénol.

6. Procédé suivant l'une quelconque des revendications 1 à 5, caractérisé en ce que l'agent surfactif est anionique et est un sel de métal alcalin d'un acide carboxylique aliphatique en $C_{12}$ à $C_{18}$, d'un acide alkylbenzène-sulfonique, d'un acide naphtalène sulfonique, d'un ester sulfurique d'un acide gras à longue chaîne ou d'un acide polyoxyéthylène-alkylsulfurique.

7. Procédé suivant l'une quelconque des revendications 1 à 6, caractérisé en ce que l'agent surfactif est non ionique et est un alkylphénol polyoxyalkylé, une alkylphénol-novolaque polyoxyalkylée, un acide gras polyoxyalkylé, un acide résinique polyoxyalkylé, un alcool polyoxyalkylé à chaîne longue ou de l'huile de ricin polyoxyalkylée.

8. Procédé suivant l'une quelconque des revendications 1 à 7, caractérisé en ce que le colloïde protecteur est de l'alcool polyvinylique, un acétate de polyvinyle partiellement hydrolysé, du méthylcellulosecarboxylate de sodium, de la méthylcellulose, de la gomme arabique, de la gomme adragante, de l'algine, de la carraghénine ou de l'amylopectine.

9. Procédé suivant l'une quelconque des revendications 1 à 8, caractérisé en ce qu'on chauffe le mélange à une température de 40 °C à 120 °C pour former le résol phénolique.

10. Utilisation des dispersions aqueuses préparées selon le procédé suivant l'une quelconque des revendications 1 à 9, pour la liaison de surfaces, au moins une des surfaces étant revêtue de la dispersion ci-dessus, caractérisée en ce qu'on laisse sécher ou sèche la dispersion, en ce qu'on amène les surfaces au contact l'un de l'autre et en ce qu'on durcit par chauffage le résol phénolique contenu dans la dispersion.